# DEMANDE DE BREVET EUROPEEN

(11) **EP 4 382 359 A1**
(43) Date de publication de la demande: **12.06.2024**
(21) Numéro de dépôt: 23215335.3
(22) Date de dépôt: 08.12.2023
(51) Int. Cl.: B60N 2/894, B60N 2/829, B60N 2/809

(54) **APPUI-TÊTE DE SIÈGE DE VÉHICULE AUTOMOBILE**

(30) Priorité: 08.12.2022 FR 2213016
(71) Demandeur: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR)
(74) Mandataire: Sayettat, Julien Christian

(57) **Abrégé**

L'invention concerne un appui-tête de siège de véhicule automobile, ledit appui-tête comprenant : deux tiges (2) ; un boitier (3) présentant deux conduits (4), issus de moulage, recevant chacun une desdites tiges respective en coulissement ; un palier inférieur (5) serrant respectif disposé dans chacun desdits conduits ; une entretoise (8) s'étendant transversalement, en matériau plastique moulé, de liaison desdites tiges entre elles, ladite entretoise présentant des parties latérales recevant en emboîtement les extrémités supérieures (9) desdites tiges en les bloquant en rotation axiale, ledit boitier présentant un espace (10) de logement de ladite entretoise, ledit logement étant ouvert vers le haut et s'étendant en hauteur pour permettre à ladite entretoise de coulisser dans ledit boitier lors de son réglage, ledit palier inférieur étant moulé d'un bloc avec ledit boitier.

## Description

L'invention concerne un appui-tête de siège de véhicule automobile et un procédé d'assemblage d'un tel appui-tête.

Il est connu, notamment du document FR-3 048 389, de réaliser un appui-tête de siège de véhicule automobile, ledit appui-tête comprenant :
- deux tiges métalliques parallèles destinées à être montées en haut de dossier dudit siège,
- un boitier monobloc d'absorption d'énergie en matériau plastique moulé, ledit boitier présentant deux conduits, issus de moulage, recevant chacun une desdites tiges respective en coulissement, de manière à permettre un réglage en hauteur dudit boitier et son maintien dans la position choisi par un dispositif de verrouillage en hauteur prévu dans ledit appui-tête,
- un palier inférieur serrant respectif disposé dans chacun desdits conduits, ledit palier inférieur étant pourvu de deux pattes flexibles diamétralement opposées et d'un moyen ressort de rappel desdites pattes vers la tige correspondante.

Dans une telle réalisation, le fait de mouler le boitier d'une pièce permet de limiter, en cas de choc, les risques de rupture qu'on peut observer lorsque ledit boitier est formé par deux demi-coques soudées l'une à l'autre.

Par ailleurs, le contact serrant exercé par les premiers paliers sur les tiges permet de limiter les bruits de vibrations, et aussi le risque d'arc-boutement pouvant nuire au bon coulissement du boitier sur lesdites tiges lorsque l'on opère son réglage en hauteur ; ceci permet de garantir un coulissement homogène du boitier sur les tiges, et ceci malgré les variations dimensionnelles que peut subir ledit boitier du fait de variations de la température ambiante.

D'autre part, dans cette réalisation, les tiges étant issues d'un tube métallique replié en forme générale de U renversé, elles sont de ce fait reliées entre elles par leurs extrémités supérieures, ce qui permet d'éviter tout risque de rotation axiale en cas de choc de la tête d'un occupant, une telle rotation risquant d'entraîner un déverrouillage du dispositif de verrouillage pouvant s'avérer dangereux pour l'occupant du siège.

En outre, dans cette réalisation, les paliers inférieurs sont des pièces emboîtées sur le boitier, ce qui permet un montage des tiges par le haut du boitier ; en effet, le montage des paliers se faisant après l'introduction des tiges dans les conduits, on bénéficie d'un espace conséquent pour réaliser cette introduction.

Cependant, les paliers étant des pièces ajoutées, on complexifie l'assemblage de l'appui-tête et on renchérit son coût.

En outre, le montage des tiges par le haut du boitier peut s'avérer difficile, voire impossible, quand lesdites tiges sont pourvues d'au moins un coude qui complexifie la cinématique de leur introduction dans les conduits.

L'invention a donc pour but de proposer un appui-tête pouvant être pourvu de tiges de géométrie complexe, ceci tout en assurant :
- une grande robustesse du boitier, de par sa nature monobloc,
- des tiges fermement bloquées en rotation axiale,
- une minimisation du nombre de composants,
- un assemblage aisé.

A cet effet, et selon un premier aspect, l'invention propose un appui-tête de siège de véhicule automobile, ledit appui-tête comprenant :
- deux tiges métalliques parallèles destinées à être montées en haut de dossier dudit siège,
- un boitier monobloc d'absorption d'énergie en matériau plastique moulé, ledit boitier présentant deux conduits, issus de moulage, recevant chacun une desdites tiges respective en coulissement, de manière à permettre un réglage en hauteur dudit boitier,
- un palier inférieur serrant respectif disposé dans chacun desdits conduits, ledit palier inférieur étant pourvu de deux pattes flexibles diamétralement opposées et d'un moyen ressort de rappel desdites pattes vers la tige correspondante,
ledit appui-tête présentant en outre les caractéristiques suivantes :
• il comprend en outre une entretoise s'étendant transversalement, en matériau plastique moulé, de liaison desdites tiges entre elles, ladite entretoise présentant des parties latérales recevant en emboîtement les extrémités supérieures desdites tiges en les bloquant en rotation axiale,
• ledit boitier présente un espace de logement de ladite entretoise, ledit logement étant ouvert vers le haut et s'étendant en hauteur pour permettre à ladite entretoise de coulisser dans ledit boitier lors de son réglage,
• ledit palier inférieur est moulé d'un bloc avec ledit boitier.

Dans cette description, les termes de positionnement dans l'espace (haut, bas, longitudinal, transversal, vertical, latéral, au-dessus, supérieur, inférieur, ...) sont pris en référence au repère du véhicule dans lequel est disposé l'appui-tête, ledit véhicule s'étendant selon un axe vertical, un axe longitudinal s'étendant selon sa longueur et un axe transversal s'étendant selon sa largeur.

Les termes relatifs à un repère circulaire (axial, diamétral, radial, ...) sont considérés relativement à l'axe général d'extension d'une tige.

Avec l'agencement proposé :
- le boitier étant monobloc, on limite les risques de rupture en cas de choc,
- les tiges sont bloquées en rotation axiale, ce qui est propice à la sécurité de l'occupant du siège,
- le fait de mouler d'un bloc le palier inférieur avec le boitier permet d'éviter le montage d'un palier distinct, ce qui simplifie la fabrication de l'appui-tête,
- l'assemblage de l'appui-tête est aisé du fait que, comme on le verra plus loin, le montage des tiges se fait par le bas du boitier, ce qui permet d'éviter le passage dans les conduits de coudes situés en partie inférieure desdites tiges.

Selon un deuxième aspect, l'invention propose un procédé d'assemblage d'un tel appui-tête.

D'autres particularités et avantages de l'invention apparaîtront dans la description qui suit, faite en référence aux figures jointes, dans lesquelles :
[Fig.1] est une représentation schématique en perspective éclatée d'un appui-tête selon une première réalisation,
[Fig.2] est une représentation schématique en coupe selon un plan sensiblement vertical transversal d'un appui-tête selon une deuxième réalisation, le boitier étant réglé en position basse,
[Fig.3] est une représentation schématique en coupe de détail selon un plan vertical longitudinal de l'appui-tête de la figure 2,
[Fig.4a] et
[Fig.4b] sont des représentations en coupe selon un plan sensiblement vertical transversal montrant deux modes de fixation d'une tige à l'entretoise d'un appui-tête selon l'invention.

En référence aux figures, on décrit un appui-tête 1 de siège de véhicule automobile, ledit appui-tête comprenant :
- deux tiges 2 métalliques parallèles destinées à être montées en haut de dossier dudit siège,
- un boitier 3 monobloc d'absorption d'énergie - en cas de choc de la tête d'un passager - en matériau plastique moulé - par exemple en polyéthylène haute densité (PEHD) -, ledit boitier présentant deux conduits 4, issus de moulage, recevant chacun une desdites tiges respective en coulissement, de manière à permettre un réglage en hauteur dudit boitier,
- un palier inférieur 5 serrant respectif disposé dans chacun desdits conduits, ledit palier inférieur étant pourvu de deux pattes 6 flexibles diamétralement opposées - notamment selon une direction longitudinale
   - et d'un moyen ressort 7 de rappel desdites pattes vers la tige correspondante,
   ledit appui-tête présentant en outre les caractéristiques suivantes :
   - il comprend en outre une entretoise 8 s'étendant transversalement, en matériau plastique moulé - ledit matériau étant notamment de température de fusion élevée, afin de minimiser ses variations dimensionnelles dans les plages de température d'utilisation dudit véhicule, ledit matériau étant par exemple à base de polyamide chargé en fibres de verre -, de liaison desdites tiges entre elles, ladite entretoise présentant des parties latérales recevant en emboîtement les extrémités supérieures 9 desdites tiges en les bloquant en rotation axiale,
   - ledit boitier présente un espace 10 de logement de ladite entretoise, ledit logement étant ouvert vers le haut et s'étendant en hauteur pour permettre à ladite entretoise de coulisser dans ledit boitier lors de son réglage,
   - ledit palier inférieur est moulé d'un bloc avec ledit boitier.

De façon non représentée, le boitier 3 est garni d'un coussin.

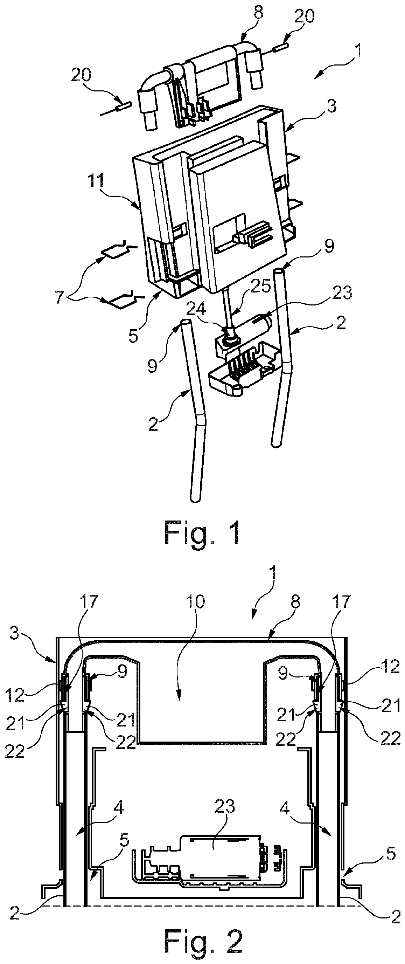

Selon la réalisation représentée en figure 1, chaque conduit 4 est pourvu en outre d'un palier supérieur 11 serrant, moulé d'un bloc avec le boitier 3 et disposé au-dessus du palier inférieur 5, ledit palier supérieur étant pourvu, comme ledit palier inférieur, de deux pattes 6 flexibles diamétralement opposées - notamment selon une direction longitudinale -, ledit palier supérieur étant en outre pourvu d'un moyen ressort 7 de rappel desdites pattes vers la tige 2 correspondante.

En variante non représentée, chaque conduit 4 est pourvu en outre d'un palier supérieur non serrant, moulé d'un bloc avec le boitier 3 et disposé au-dessus du palier inférieur 5, ledit palier supérieur étant pourvu de saillies - par exemple sous forme de bossages ou de nervures - de guidage pointant vers l'intérieur de manière à venir sensiblement au contact de la tige 2 correspondante pour assurer son guidage en coulissement.

Selon la réalisation représentée en figure 2, l'espace 10 de logement de l'entretoise 8 se présente sous forme de tunnel de section sensiblement ajustée à celle de ladite entretoise, ladite entretoise - respectivement ou ledit espace, selon une variante non représentée - étant pourvu de saillies 12 de guidage moulées d'une pièce avec ladite entretoise - respectivement ou ledit boitier -, de manière à assurer sensiblement un contact entre ladite entretoise et ledit tunnel pour assurer le guidage en coulissement de ladite entretoise.

Avec un tel agencement, on maximise la distance entre les zones de guidage d'une tige 2 - la distance entre un palier inférieur 5 et une saillie 12 étant typiquement supérieure à 100 mm - ce qui permet un guidage de ladite tige plus efficient que celui mis en oeuvre avec un palier supérieur 11.

Selon diverses réalisations, les saillies 12 sont sous forme de :
- bossages, selon une réalisation non représentée,
- et/ou de nervures, selon une réalisation non représentée,
- et/ou de zones élastiquement rétractables, en forme de pontets selon la réalisation représentée en figure 2.

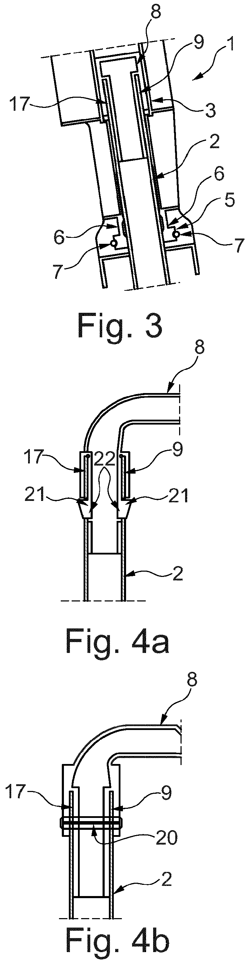

Selon un mode de réalisation illustré en figures 1 et 3, le moyen ressort 7 est à base d'un fil ou d'une lame métallique présentant une forme générale en U ou en C dont chacune des branches vient en appui sur chacune des pattes 6 de palier 5,11, de manière à réaliser un pincement de la tige 2 correspondante entre lesdites pattes.

Selon divers modes de fixation des tiges 2 à l'entretoise 8 :
- des méplats sont disposés en extrémités supérieures 9 des tiges 2, lesdites extrémités étant emboîtées dans des logements 17 ajustés prévus en parties latérales de l'entretoise 8, de manière à bloquer lesdites tiges en rotation, selon un mode de réalisation non représenté,
- et/ou lesdites extrémités sont emboîtées dans des logements 17 ajustés prévus dans ladite entretoise, lesdits logements et lesdites extrémités étant traversés par une goupille 20 de manière à bloquer lesdites tiges en rotation, comme représenté en figures 1 et 4b,
- et/ou ladite entretoise est pourvue de harpons 21 élastiquement rétractables saillant vers le bas, lesdits harpons étant déformables entre une position rétractée de montage et une position déployée d'ancrage, lesdites tiges étant sous forme de tubes recevant au moins un desdits harpons, ledit harpon une fois monté s'insérant dans un orifice radial 22 prévu en extrémité de la tige 2 correspondante, de manière à bloquer lesdites tiges en rotation, comme représenté en figures 2 et 4a.

Selon un mode de réalisation non représenté, l'appui-tête 1 comprend en outre un dispositif de verrouillage manuel du boitier 3 par rapport aux tiges 2 selon une pluralité de positions verticales, de manière à verrouiller le réglage en hauteur choisi pour ledit boitier, ledit dispositif comprenant :
- au moins une - et notamment deux - tige 2 crantée pourvue de crans de réglage s'étageant axialement,
- une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

Selon le mode de réalisation représenté, l'appui-tête 1 comprend en outre un dispositif motorisé d'actionnement du boitier en réglage, ledit dispositif comprenant :
- un moteur 23 monté solidairement au boitier 3, ledit moteur actionnant en rotation un écrou 24 monté rotatif sur ledit boitier,
- une vis sans fin 25 s'étendant verticalement, l'extrémité supérieure de ladite vis étant fixée à l'entretoise 8, ladite vis coopérant avec ledit écrou de manière à permettre le déplacement dudit boitier par mise en rotation dudit écrou.

On peut prévoir un jeu transversal entre une tige 2 et un conduit 4 - comme illustré en figure 2 sur le conduit 4 disposé à gauche - de manière à prendre en compte les variations dimensionnelles du boitier 3 causées par des variations de température.

On décrit enfin un procédé d'assemblage d'un tel appui-tête 1, ledit procédé comprenant les étapes suivantes :
- prévoir deux tiges 2 métalliques,
- prévoir un boitier 3 monobloc en matériau plastique moulé, ledit boitier présentant deux conduits 4 issus de moulage,
- prévoir une entretoise 8 en matériau plastique moulé de liaison desdites tiges entre elles,
- introduire par le bas lesdites tiges dans lesdits conduits jusqu'à les faire dépasser desdits conduits vers le haut,
- introduire ladite entretoise dans un espace 10 ouvert vers le haut prévu dans ledit boitier et emboîter les extrémités supérieures 9 desdites tiges en parties latérales de ladite entretoise.

Comme évoqué plus haut, l'assemblage de l'appui-tête 1 est aisé du fait que le montage des tiges 2 se fait par le bas du boitier 3, ce qui permet d'éviter le passage dans les conduits 4 de coudes situés en partie inférieure desdites tiges.

## Revendications

1. Appui-tête (1) de siège de véhicule automobile, ledit appui-tête comprenant :
• deux tiges (2) métalliques parallèles destinées à être montées en haut de dossier dudit siège,
• un boitier (3) monobloc d'absorption d'énergie en matériau plastique moulé, ledit boitier présentant deux conduits (4), issus de moulage, recevant chacun une desdites tiges respective en coulissement, de manière à permettre un réglage en hauteur dudit boitier,
• un palier inférieur (5) serrant respectif disposé dans chacun desdits conduits, ledit palier inférieur étant pourvu de deux pattes (6) flexibles diamétralement opposées et d'un moyen ressort (7) de rappel desdites pattes vers la tige correspondante,
ledit appui-tête étant **caractérisé en ce que** :
• il comprend en outre une entretoise (8) s'étendant transversalement, en matériau plastique moulé, de liaison desdites tiges entre elles, ladite entretoise présentant des parties latérales recevant en emboîtement les extrémités supérieures (9) desdites tiges en les bloquant en rotation axiale,
• ledit boitier présente un espace (10) de logement de ladite entretoise, ledit logement étant ouvert vers le haut et s'étendant en hauteur pour permettre à ladite entretoise de coulisser dans ledit boitier lors de son réglage,
• ledit palier inférieur est moulé d'un bloc avec ledit boitier.

2. Appui-tête selon la revendication 1, **caractérisé en ce que** chaque conduit est pourvu en outre d'un palier supérieur (11) serrant, moulé d'un bloc avec le boitier et disposé au-dessus du palier inférieur (5), ledit palier supérieur étant pourvu de deux pattes (6) flexibles diamétralement opposées, ledit palier supérieur étant en outre pourvu d'un moyen ressort (7) de rappel desdites pattes vers la tige (2) correspondante.

3. Appui-tête selon la revendication 1, **caractérisé en ce que** chaque conduit (4) est pourvu en outre d'un palier supérieur non serrant, moulé d'un bloc avec le boitier (3) et disposé au-dessus du palier inférieur (5), ledit palier supérieur étant pourvu de saillies de guidage pointant vers l'intérieur de manière à venir sensiblement au contact de la tige (2) correspondante pour assurer son guidage en coulissement.

4. Appui-tête selon l'une quelconque des revendications précédentes, **caractérisé en ce que** l'espace (10) de logement de l'entretoise (8) se présente sous forme de tunnel de section sensiblement ajustée à celle de ladite entretoise, ladite entretoise - respectivement ou ledit espace - étant pourvu de saillies (12) de guidage moulées d'une pièce avec ladite entretoise - respectivement ou le boitier (3) -, de manière à assurer sensiblement un contact entre ladite entretoise et ledit tunnel pour assurer le guidage en coulissement de ladite entretoise.

5. Appui-tête selon la revendication précédente, **caractérisé en ce que** les saillies (12) sont sous forme de :
• bossages,
• et/ou de nervures,
• et/ou de zones élastiquement rétractables.

6. Appui-tête selon l'une quelconque des revendications précédentes, **caractérisé en ce que** le moyen ressort (7) est à base d'un fil ou d'une lame métallique présentant une forme générale en U ou en C dont chacune des branches vient en appui sur chacune des pattes (6) de palier (5,11), de manière à réaliser un pincement de la tige (2) correspondante entre lesdites pattes.

7. Appui-tête selon l'une quelconque des revendications précédentes, **caractérisé en ce que** :
• des méplats sont disposés en extrémités supérieures (9) des tiges (2), lesdites extrémités étant emboîtées dans des logements (17) ajustés prévus en parties latérales de l'entretoise (8), de manière à bloquer lesdites tiges en rotation,
• et/ou lesdites extrémités sont emboîtées dans des logements (17) ajustés prévus dans ladite entretoise, lesdits logements et lesdites extrémités étant traversés par une goupille (20) de manière à bloquer lesdites tiges en rotation,
• et/ou ladite entretoise est pourvue de harpons (21) élastiquement rétractables saillant vers le bas, lesdits harpons étant déformables entre une position rétractée de montage et une position déployée d'ancrage, lesdites tiges étant sous forme de tubes recevant au moins un desdits harpons, ledit harpon une fois monté s'insérant dans un orifice radial (22) prévu en extrémité de la tige (2) correspondante, de manière à bloquer lesdites tiges en rotation.

8. Appui-tête selon l'une quelconque des revendications 1 à 7, **caractérisé en ce qu'**il comprend en outre un dispositif de verrouillage manuel du boitier (3) par rapport aux tiges (2) selon une pluralité de positions verticales, de manière à verrouiller le réglage en hauteur choisi pour ledit boitier, ledit dispositif comprenant :
• au moins une tige (2) crantée pourvue de crans de réglage s'étageant axialement,
• une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

9. Appui-tête selon l'une quelconque des revendications 1 à 7, **caractérisé en ce qu'**il comprend en outre un dispositif motorisé d'actionnement du boitier (3) en réglage, ledit dispositif comprenant :
• un moteur (23) monté solidairement au boitier, ledit moteur actionnant en rotation un écrou (24) monté rotatif sur ledit boitier,
• une vis sans fin (25) s'étendant verticalement, l'extrémité supérieure de ladite vis étant fixée à l'entretoise (8), ladite vis coopérant avec ledit écrou de manière à permettre le déplacement dudit boitier par mise en rotation dudit écrou.

10. Procédé d'assemblage d'un appui-tête selon l'une quelconque des revendications précédentes, ledit procédé comprenant les étapes suivantes :
• prévoir deux tiges (2) métalliques,
• prévoir un boitier (3) monobloc en matériau plastique moulé, ledit boitier présentant deux conduits (4) issus de moulage et un espace (10) de logement ouvert vers le haut,
• prévoir une entretoise (8) en matériau plastique moulé de liaison desdites tiges entre elles,
• introduire par le bas lesdites tiges dans lesdits conduits jusqu'à les faire dépasser desdits conduits vers le haut,
• introduire ladite entretoise dans ledit espace et emboîter les extrémités supérieures (9) desdites tiges en parties latérales de ladite entretoise.
